(19) **Europäisches Patentamt / European Patent Office / Office européen des brevets**

(11) **EP 3 932 864 A1**

(12) # EUROPEAN PATENT APPLICATION
published in accordance with Art. 153(4) EPC

(43) Date of publication:
**05.01.2022 Bulletin 2022/01**

(21) Application number: **20778784.7**

(22) Date of filing: **12.03.2020**

(51) Int Cl.:
***C01B 33/12*** *(2006.01)*       ***C01B 33/18*** *(2006.01)*

(86) International application number:
**PCT/JP2020/010943**

(87) International publication number:
**WO 2020/195914 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2019  JP 2019055799**

(71) Applicant: **Tokuyama Corporation**
**Shunan-shi, Yamaguchi 745-8648 (JP)**

(72) Inventor: **Kenichi ISHIZU**
**Shunan-shi, Yamaguchi 745-8648 (JP)**

(74) Representative: **Germain Maureau**
**12, rue Boileau**
**69006 Lyon (FR)**

(54) **SILICA-TITANIA COMPOSITE OXIDE POWDER**

(57)     A silica-titania composite oxide powder of the present invention has an average particle diameter D ($\mu$m) of 0.1 $\mu$m or more to 3.0 $\mu$m or less, an average refractive index of 1.47 or more at a measurement wavelength of 589 nm, and a minimum absorbance S measured from a dispersion of 30 mass% of silica-titania composite oxide particles in a liquid having the same refractive index as the average refractive index, the minimum absorbance S satisfying the relationship "S <0.026 - 0.008 $\times$ D."

EP 3 932 864 A1

**Description**

TECHNICAL FIELD

The present invention relates to a silica-titania composite oxide powder that has a controlled refractive index and distribution and reduced coarse particles of 5 $\mu$m or more, and is suitably usable as a filler for highly transparent resins and transparent resin adhesives, an anti-blocking agent for films, and a hard coat material.

BACKGROUND ART

Thermoplastic resins such as PET, polycarbonate, PMMA and polystyrene are widely used in an industrial field owing to their excellent transparency, mechanical properties and moldability. For improvement in physical properties of organic polymers, researches have been conducted on a composite material of an organic compound and an inorganic compound (hereinafter referred to as an organic-inorganic composite material) having the characteristics of the inorganic compound such as high strength, high elastic modulus, and heat resistance, while keeping the characteristics of the organic polymers such as flexibility, low density, and moldability.

One of known methods for producing the organic-inorganic composite material is a method of directly adding an inorganic filler to an organic polymer. For example, Patent Document 1 proposes a method of adding surface-treated silica particles as an inorganic filler to polycarbonate to improve mechanical properties such as tensile strength and flame retardancy.

However, the addition of the inorganic filler decreases the transparency of the organic-inorganic composite material. As a remedy for this issue, another method proposes use of an inorganic filler having a refractive index equivalent to that of an organic material used (usually, various resins), thereby improving the function of an organic-inorganic composite material while reducing a decrease in transparency. For example, Patent Document 2 proposes an epoxy resin composition using silica-titania particles having the same refractive index as a resin used. This may keep the organic-inorganic composite material transparent, while controlling the coefficient of thermal expansion. However, the addition of the inorganic filler having substantially the same refractive index as the resin used has been insufficient to keep the original transparency of the resin. The mechanism related to the optical loss is yet unknown, and no countermeasures against the optical loss has been proposed. For this reason, existing organic-inorganic composite materials have been unapplicable to uses requiring high transparency.

Various studies have also been conducted on a method of producing such an inorganic filler having a controlled refractive index. Among them, many methods, based on a so-called sol-gel method, of producing spherical particles by hydrolysis of metal alkoxide have been proposed. For example, Patent Document 3 proposes spherical particles composed of silica and an oxide of a Group IV metal. Patent Document 4 proposes a method of simultaneously adding a basic catalyst and an alkoxide material and discharging part of the mixture outside of the system to obtain relatively large silica-titania particles having high monodispersibility. Patent Documents 5 and 6 propose use of a complexing agent to produce particles having a high titania content. Various other proposals have been made (e.g., Patent Documents 7 and 8).

Recent flat panel displays, increasing in size and definition, require films for optical use to have substantially no defects as well as high transparency. For production of an optical film, any coarse particles or aggregates contained in the inorganic filler may cause defects or scratches. When used as an underfill for semiconductors, the organic-inorganic composite material needs to flow in a narrow channel. However, any coarse particles or aggregates contained in the organic-inorganic composite material blocks the material from flowing evenly in the narrow channel, resulting in voids or adhesion defects. Thus, when the material is used for various optical adhesives such as those for optical semiconductors, an extremely low content of coarse particles and aggregates is of great importance to avoid defects.

CITATION LIST

PATENT DOCUMENTS

Patent Document 1: Japanese Unexamined Patent Publication No. 2004-107470
Patent Document 2: Japanese Unexamined Patent Publication No. H06-65475
Patent Document 3: Japanese Examined Patent Publication No. H03-33721
Patent Document 4: Japanese Unexamined Patent Publication No. H08-48505
Patent Document 5: Japanese Unexamined Patent Publication No. 2007-269612
Patent Document 6: Japanese Unexamined Patent Publication No. 2008-37700

Patent Document 7: Japanese Unexamined Patent Publication No. 2007-269594
Patent Document 8: Japanese Unexamined Patent Publication No. 2003-252616

## SUMMARY OF INVENTION

### TECHNICAL PROBLEM

The inventors of the present invention have conducted earnest studies to solve the above problems. The studies have revealed that any refractive index distribution among the inorganic particles used for the organic-inorganic composite material, i.e., any variation in refractive index of each inorganic particle, spoils the high transparency, even if the refractive index of the inorganic particles is adjusted in accordance with the refractive index of the organic polymer. The inorganic particles tend to reduce the refractive index distribution if fired at a high temperature. However, the reduction is insufficient, and the firing at such a high temperature disadvantageously leads to easy production of the coarse particles.

As a result of further intensive studies, the inventors have completed the present invention based on the findings that controlling the nitrogen content in a powder in the course of the production of the inorganic particles, i.e., after drying and before firing, within a specific range or less can reduce the refractive index distribution in the subsequent firing at a low temperature, and can prepare a silica-titania composite oxide particle powder with less coarse particles generated.

Specifically, the present invention provides a silica-titania composite oxide powder having an average particle diameter D ($\mu$m) in a range of 0.1 $\mu$m or more to 3.0 $\mu$m or less measured by a laser light scattering method, an average refractive index of 1.47 or more at a measurement wavelength of 589 nm, and a minimum absorbance S measured from a dispersion of 30 mass% silica-titania composite oxide particles in a liquid having the same refractive index as the average refractive index, the minimum absorbance S satisfying the following relationship:

$$S < 0.026 - 0.008 \times D$$

### ADVANTAGES OF THE INVENTION

Use of silica-titania composite oxide particles having a reduced refractive index distribution according to the present invention can provide an organic-inorganic composite material having higher transparency than a material obtained by using particles having a refractive index just adjusted to that of an organic polymer. In addition, the reduced generation of the coarse particles can actively improve the function of the product by adding an inorganic filler.

### DESCRIPTION OF EMBODIMENTS

A silica-titania composite oxide powder according to the embodiment contains powder particles of silica ($SiO_2$) and titania ($TiO_2$), and these particles are compounded at an atomic level. The term "compounded at the atomic level" means that each particle contains one oxygen atom bonded to a Si atom and a Ti atom (Si-O-Ti). In the present embodiment, if some particles contain a Si-O-Si bond and a Ti-O-Ti bond, the production method described below makes the ratio of silica and titania in a single particle substantially uniform at any location, and the particle contains the Si-O-Ti bond. Thus, it can be said that the particles are compounded at the atomic level.

The ratio of silica and titania is not particularly limited, but titania is preferably contained in an amount of 25 mol% or less, more preferably 20 mol% or less, and particularly preferably 17 mol% or less, relative to the total amount of oxide, from the viewpoint of easy production of independent spherical particles and the range of refractive index close to that of many resins. The refractive index tends to increase with the increase in titania content. The particles forming the silica-titania composite oxide powder of the present embodiment are preferably amorphous. However, a high titania content, i.e., a low silica content, relative to the constituents of the particles makes it difficult to form an amorphous structure based on the silica component, and microcrystals of titania are easily generated in the particles.

Taking the higher refractive index than silica into account, the lower limit of the titania content is preferably 1 mol% or more, particularly preferably 3 mol% or more.

The silica-titania composite oxide powder of the present embodiment has a volume-based cumulative 50% diameter (hereinafter referred to as an "average particle diameter") measured by a laser light scattering method in a range of 0.1 $\mu$m or more to 3.0 $\mu$m or less. If the average particle diameter is smaller than 0.1 $\mu$m, individual particles tend to become aggregates, and such aggregates are prone to cause defects both optically and physically after the preparation of a composite. If the particles are too large, the transparency significantly varies due to a slight difference in refractive index, making the production of a transparent composite material difficult. Thus, the average particle diameter is more preferably in a range of 0.2 $\mu$m or more to 2 $\mu$m or less, and still more preferably in a range of 0.4 $\mu$m or more to 1.5 $\mu$m or less.

The average particle diameter in the above range causes no problem with the particle size distribution. However, in a preferred embodiment, the powder has high monodispersity because a broad particle size distribution leads to easy production of coarse particles.

The silica-titania composite oxide powder of the present embodiment has an average refractive index of 1.47 or more at a measurement wavelength of 589 nm. The term "refractive index" hereinafter refers to the average refractive index at a measurement wavelength of 589 nm. While silica as a single element has a refractive index of 1.46, the powder of the present embodiment, compounded with titania, has a higher refractive index than silica alone. Thus, when the powder is compounded with various resins often having a refractive index exceeding 1.5, the refractive index of the powder can easily coincide with that of the resin. This can provide the resulting powder with an excellent optical property such as transparency.

The average refractive index is a value measured by an immersion method as described below. Specifically, various types of liquid having different refractive indices at a wavelength of 589 nm are prepared, and the silica-titania composite oxide powder is dispersed in each liquid. The transparency (transmittance or absorbance) of each of the resulting dispersions at a wavelength of 589 nm is measured, and the refractive index of the liquid that has produced the most transparent dispersion is defined as the refractive index of the silica-titania composite oxide powder at a wavelength of 589 nm.

The refractive index is measured after the silica-titania composite oxide powder is dried at 100°C for 12 hours or more because the refractive index may be affected by moisture adsorbed on the powder.

The refractive index of the liquid can be controlled, for example, by mixing various substances having different refractive indices to obtain a desired refractive index, or changing the temperature during the measurement. A liquid substantially transparent at a wavelength of 589 nm is used as the dispersion medium in the measurement. Examples of such a liquid include water, toluene, 1-bromonaphthalene, 1-chloronaphthalene, diiodomethane, sulfur-containing diiodomethane, 2-methoxyethanol, benzyl alcohol, methyl salicylate, methyl benzoate, and silicone oil. These liquids may be appropriately mixed, and various salts or organic solids may be dissolved in the mixture to control the refractive index. Commercially available refractive index standard solutions having various refractive indices may be used.

Alternatively, the refractive index of the silica-titania composite oxide powder may be determined according to Method B of JIS K7142, Plastics, Determination of refractive index, i.e., an immersion method for determining the refractive index of powdered or granulated transparent materials by means of a microscope.

The refractive index of the silica-titania composite oxide powder of the present embodiment can be controlled by changing the ratio of silica and titania. Specifically, as described above, the refractive index of pure silica is 1.46, and the refractive index of the powder increases as the ratio of titania increases.

One of the greatest features of the silica-titania composite oxide powder of the present embodiment is that the following formula (1) is satisfied, where S represents the minimum absorbance at a wavelength of 589 nm of a dispersion of 30 mass% silica-titania composite oxide particles in a liquid having the same refractive index (at 589 nm) as the average refractive index obtained as described above, and D represents the average particle diameter.

$$S < 0.026 - 0.008 \times D \ (1)$$

In the above formula (1), the minimum absorbance S is an index of variation (distribution) in refractive index of the particles constituting the silica-titania composite oxide powder. As defined above, the minimum absorbance S is measured from a liquid having the same refractive index as the refractive index of the silica-titania composite oxide powder. Thus, the refractive index difference should be zero, and the absorbance should also be zero. However, not all the particles constituting the silica-titania composite oxide powder have the same refractive index. The refractive index slightly differs from particle to particle, and the average value is measured by the immersion method.

Thus, the dispersion of the silica-titania composite oxide considerably contains particles having a refractive index different from that of the liquid. Such particles lower the transparency, and increase the minimum absorbance S. In other words, the smaller the minimum absorbance S, the smaller the proportion of particles having a refractive index deviating from the average refractive index.

The term "the same refractive indices" of the particles means that the difference in refractive index is in a range of ± 0.001.

As is well known, the particle diameter influences the transparency (absorbance) of a particle dispersion. If the particle diameter is small, the influence is relatively small, irrespective of the difference in refractive index. The above formula (1) is obtained by adding the influence of the particle diameter (D) to the variation in refractive index.

In the silica-titania composite oxide powder of the present embodiment, the variation in refractive index between the particles is smaller than ever before. Thus, a dispersion of the silica-titania composite oxide powder in a resin or a solvent can have higher transparency than ever before.

The silica-titania composite oxide powder of the present embodiment contains the coarse particles having a particle diameter of 5 μm or more preferably in a ratio of 500 ppm or less, particularly preferably 200 ppm or less, to the total number of particles. The "coarse particle" is a collection of some independent particles or an independent particle. Increase of such coarse particles tends to cause defects after the silica-titania composite oxide powder is compounded with, for example, a resin, to form a composite material.

As for the coarse particles, a dispersion of 2.5 mass% silica-titania composite oxide powder in water or a methanol solution is prepared using an ultrasonic disintegrator, and particles in the dispersion are counted five times, 50,000 particles each, i.e., 250,000 particles in total, using a Coulter counter. The ratio of the coarse particles is a ratio of the count of particles having a diameter of 5 μm or more.

The shape of each particle contained in the silica-titania composite oxide powder of the present embodiment is not particularly limited, but is preferably spherical in consideration of the fluidity and moldability of the organic-inorganic composite material.

The silica-titania composite oxide powder of the present embodiment preferably contains less metals other than silicon and titanium. In particular, the content of alkali metals such as sodium and potassium is preferably 10 ppm or less, more preferably 1 ppm or less.

Depending on the use of the silica-titania composite oxide powder of the present embodiment, the surfaces of the particles may be modified as appropriate by a surface treatment. For a composite with a resin, the particles can be surface-treated by a known method to modify their surfaces in consideration of compatibility with the resin to be used, without affecting the minimum absorbance. For a composite with a resin having a hydrophilic site, for example, the particles preferably have many hydrophilic silanol groups on their surfaces. In this case, the silica-titania composite oxide powder can be used as it is, or may have the surface coated with an inorganic substance for higher affinity. When low hydrophilicity of the surface is required, a silane coupling agent having a methyl group, for example, may be appropriately used to modify the surface.

The silica-titania composite oxide powder of the present embodiment contains substantially no coarse particles and shows excellent transparency when used as a filler in an organic polymer, and thus can be suitably used as a filler in a resin composition for an electronic material which requires such transparency. When added to a resin, the silica-titania composite oxide powder gives the resulting resin composition excellent fluidity during melting, can control the transparency of a molded article, and can precisely control the surface unevenness. Thus, the silica-titania composite oxide powder can be suitably used for various molded articles, including films.

The type of the resin to be blended with the silica-titania composite oxide powder of the present embodiment is not particularly limited. The type of the resin is suitably selected depending on the desired application. Examples of the resin include an epoxy resin, an acrylic resin, a silicone resin, a polyester resin, and an olefin-based resin, taking the value of the refractive index into account.

For example, the epoxy resin, the acrylic resin, and the silicone resin are preferably used for semiconductor encapsulation materials. The olefin-based resin (e.g., polypropylene, polyethylene, and polystyrene), and the polyester resin are preferably used for films.

For use as a structure, resins such as polycarbonate and an acrylic resin are preferable.

The amount of the silica-titania composite oxide powder to be added to a resin to prepare a resin composition is appropriately adjusted according to the use and purpose thereof. Specifically, for use as the semiconductor encapsulation materials, the powder content is preferably in a range of 30 parts by mass to 900 parts by mass relative to 100 parts by mass of the resin. For use as the films, the powder content is preferably in a range of 0.01 parts by mass to 10 parts by mass relative to 100 parts by mass of the resin. For use as a structural material, the range is preferably 0.01 parts by mass to 100 parts by mass relative to 100 parts by mass of the resin.

When the silica-titania composite oxide powder of the present embodiment is added to a resin and used as a resin composition, it is needless to say that the resin composition contains other components such as another filler as necessary.

The silica-titania composite oxide powder of the present embodiment, dispersed in a solvent, can be used as a material for production of the films described above and coating materials.

«Method of Producing Silica-Titania Composite Oxide Powder»

The silica-titania composite oxide powder of the present embodiment can be basically produced by a so-called sol-gel method using the following alkoxide of silicon and alkoxide of titanium. This method, which will be hereinafter referred to as the "present production method," includes:

(1) mixing the alkoxide of silicon and the alkoxide of titanium to form a composite, thereby producing a composite alkoxide material (may be hereinafter referred to as a "compounding step");
(2) adding the composite alkoxide material in a dispersion medium containing water in the presence of a nitrogen-containing basic catalyst, and hydrolyzing and condensing the resulting mixture to produce composite oxide particles, thereby obtaining a dispersion in which the composite oxide particles are dispersed in the dispersion medium (may be hereinafter referred to as a "reaction step");

(3) separating the dispersion into solid and liquid contents;

(4) drying the solid content; and

(5) firing the dried product.

Although the sol-gel method is well known, in order to obtain the silica-titania composite oxide powder of the present embodiment, the nitrogen content needs to be controlled within the following range after the drying step (4) and before the firing step (5), and then the firing is performed:

$$\text{Nitrogen content (mass\%)} < 0.19 \times \text{Ti content} + 0.35$$

where the Ti content is the content of Ti expressed in % when the total amount of Ti and Si on a mol basis is 100%. Satisfying the formula, i.e., controlling the nitrogen content smaller than the numerical value, can reduce fine voids remaining after the subsequent firing, and can provide composite oxide particles having small variation in refractive index.

Other steps, e.g., removal of impurities by filtering the material liquid or liquids used in the steps, and crushing and classifying dried or fired powder, may be performed as needed.

The above-described steps will be described below. The steps (1) to (3) and (5) are performed in the same manner as those of a widely known method of producing a composite oxide by a sol-gel method. Thus, steps not described below are performed by selecting suitable well-known techniques. The following method can be modified as necessary.

(1) Compounding Step

In the present production method, first, an alkoxide of silicon and an alkoxide of titanium are compounded to prepare a composite alkoxide.

Any known method can be used for the compounding. Preferred examples thereof include a method of adding water to an alkoxide of silicon to prepare a partially hydrolyzed alkoxide, and mixing this solution with an alkoxide of titanium, as disclosed in Patent Document 4.

Examples of the alkoxide of silicon include alkoxides such as tetramethoxysilane, tetraethoxysilane, and tetrapropoxide.

Examples of the alkoxide of titanium include alkoxides such as titanium tetraisopropoxide and titanium tetra-n-butoxide. Among them, titanium tetraisopropoxide is particularly preferable for ease of industrial availability and ease of handling.

The alkoxides of titanium and alkoxides of silicon may be used alone, or one or both of them may be used in combination of two or more.

The alkoxides are preferably mixed with an organic solvent such as alcohol. In this case, the type of the organic solvent may be changed depending on the alkoxides used.

The amount of the organic solvent used can be adjusted depending on the size of the particles and the desired particle size distribution.

The amount of water used for partial hydrolysis is controlled as appropriate.

A catalyst is preferably used to speed up the partial hydrolysis of the alkoxide of silicon and the compounding of the alkoxides. Acid is preferably used as the catalyst, and specific examples thereof include hydrochloric acid, sulfuric acid, nitric acid, and oxalic acid. The acid is preferably used to control the pH of the aqueous solution within a range of 1 to 4.

The alkoxide obtained by the above-described compounding will be hereinafter referred to as a composite alkoxide.

In the compounding, the alkoxide of silicon to be bonded with the alkoxide of titanium may be a monomer or an oligomer. The composite alkoxide is an alkoxide having one Ti atom, at least three to four Si atoms, and at least ten to twelve alkoxy groups in one molecule. Some of the alkoxy groups of the composite alkoxide may be hydrolyzed.

In the present embodiment, the ratio of the alkoxide of silicon and the alkoxide of titanium can be changed depending on the desired value of the refractive index.

Although part of the alkoxide of silicon is used for the compounding with the alkoxide of titanium, the entire amount of the alkoxide of silicon is not necessarily used for the compounding.

(2) Reaction Step

In the present production method, the composite alkoxide prepared as described above is used as a material, from which a particulate product is obtained. In the compounding step, a mixture usually containing a composite alkoxide and additionally containing an alkoxide of silicon and a hydrolysate thereof, water, and an organic solvent is obtained. The mixture can be used as it is without the need of isolating the composite alkoxide.

In this step, fine particles called nuclei are produced from the composite alkoxide material. Then, hydroxyl groups on the surfaces of the fine particles are condensed with hydroxyl groups generated by hydrolysis of the composite alkoxide material, and the alkoxide material in the solution are bonded to the surfaces of the particles repeatedly, thereby obtaining particles of a desired size.

The particles obtained in this step are those grown through the repeated condensation.

The particles consist of a network structure having continuous Si-O-Si bonds, Si-O-Ti bonds, and Ti-O-Ti bonds in part.

The particles contain an alkoxy group remaining as it is without being hydrolyzed, an Si-OH group or Ti-OH group generated by hydrolysis of an alkoxy group and remains as it is without being condensed, or a basic catalyst, water, and a solvent component chemically bonded to these groups.

As described above, the particles obtained in this reaction step have an inorganic skeleton, and also have various molecules and linking groups such as the solvent used in the reaction or alcohol generated by hydrolysis.

The reaction step in the present production method can be carried out by any known method. Specifically, the composite alkoxide material may be added to an alkaline solvent to obtain a composite oxide as disclosed in Patent Document 3. Alternatively, an alkaline aqueous solution may be added together with the composite alkoxide material to supplement water reduced by hydrolysis as disclosed in Patent Document 4.

The sol-gel method usually employs a basic reaction system to perform the hydrolysis and the condensation. In contrast, the present production method uses a nitrogen-containing basic catalyst. The nitrogen-containing basic catalyst contains no components that are difficult to remove after the reaction, and thus can eliminate the possibility that unnecessary components such as alkali metal are contained in the produced composite oxide. Examples of the nitrogen-containing basic catalyst include ammonia, quaternary ammonium hydroxide, and various amine compounds. Examples of the amine compounds include methylamine, dimethylamine, trimethylamine, ethylamine, dimethylamine, and trimethylamine. Examples of the quaternary ammonium hydroxide include hydroxides such as tetramethylammonium and tetraethylammonium. Among them, ammonia is particularly preferably used because it is highly volatile, easy to remove, and speeds up the sol-gel reaction.

The ratio of the nitrogen-containing basic catalyst used is appropriately determined in consideration of the reaction rates of the hydrolysis and polycondensation reaction of the metal alkoxide. The ratio of the nitrogen-containing basic catalyst used is usually set to control the pH of the reaction solution to 8 or more.

The amount of each material used in the reaction step of the present production method is appropriately selected and determined from a known range in consideration of the configuration of the reaction apparatus and the reaction scale to obtain the silica-titania composite oxide powder having a desired refractive index and particle diameter.

Reaction equipment used in the production method of the present embodiment preferably includes a reactor with a stirrer, a feeder capable of controlling the amount of liquid added, a liquid supply tube, and a temperature controller for maintaining the temperature of the reaction liquid.

Any reaction temperature at which the sol-gel reaction rapidly proceeds can be selected without particular limitation depending on the type of the material used. The reaction temperature is suitably selected from a known range according to the particle diameter of the intended silica-titania composite oxide particles, and is advantageously in a range of -10°C to 60°C to obtain the silica-based composite oxide particles having an average particle diameter of 0.1 $\mu$m to 3.0 $\mu$m.

For the reliable progress of the reaction, continuous stirring at a temperature substantially equal to the reaction temperature, i.e., so-called aging, may be performed after the addition of the liquid. The aging preferably continues for 0.25 hours to 5 hours.

In order to provide the particles with a desired size, part of the reacted liquid may continue reacting with the same composite alkoxide material.

The method described above provides a dispersion of silica-titania composite oxide particles having an average particle diameter of 0.1 $\mu$m to 3.0 $\mu$m measured by a laser diffraction scattering method.

The silica-titania composite oxide particles are dispersed well in the dispersion, producing substantially no adhesion particles or aggregates. However, a small amount of coarse independent primary particles having a particle diameter exceeding 5 $\mu$m may possibly remain in the dispersion due to local excessive progress of the reaction. For removal of such coarse particles, the dispersion is preferably filtered after the reaction step ends.

(3) Solid-Liquid Separation

The silica-titania composite oxide particles obtained in the reaction step are then separated from the reaction liquid. The liquid that has completed the reaction contains miscellaneous substances such as unreacted alkoxide, the nitrogen-containing basic catalyst, water, and the solvent (other components than the silica-titania composite oxide particles contained in the reaction liquid will be hereinafter referred to as "reaction liquid components").

The separation may be performed by any known method, such as a method of removing the solvent by evaporation and separating evaporation residues including the silica-titania composite oxide particles, a method of precipitating the silica-titania composite oxide particles by centrifugal force and gravity and removing the supernatant to obtain a concentrate containing the silica-titania composite oxide particles, and a method of filtering the reaction liquid with a filter medium to obtain a concentrate containing the silica-titania composite oxide particles captured on the filter medium.

The above-described methods may be combined. As a preferable example, a filtering medium is provided in a centrifuge to remove a solution that has passed through the filtering medium by centrifugal force, thereby obtaining a concentrate containing the silica-titania composite oxide particles on the filter medium.

Among the above methods, a method involving filtration is particularly preferable because the nitrogen content described later can be easily reduced.

For smooth solid-liquid separation, a loose agglomerate may be formed by adding a coagulant to the reaction liquid to promote sedimentation or improve filterability.

Washing the filtered product is also preferable because the nitrogen content is easily reduced.

<Reduction of Nitrogen Content>

The concentrate containing the silica-titania composite oxide particles obtained by the solid-liquid separation contains, in addition to the reaction liquid components just remaining in the gaps between the silica-titania composite oxide particles, unreacted alkoxy groups, uncondensed Si-OH groups, and uncondensed Ti-OH groups present in the silica-titania composite oxide particles, and the reaction liquid components chemically bonded thereto.

The reaction liquid components remaining between the silica-titania composite oxide particles easily flow out when the particles are used as an inorganic filler, and become a factor interfering with mixing of the particles with the organic polymer. The unreacted alkoxy groups, the uncondensed Si-OH groups, and the uncondensed Ti-OH groups are usually present in fine voids. This may deteriorate physical properties, such as mechanical strength, of the silica-titania composite oxide particles, and may adversely affect the refractive index. Such fine voids, which are not uniform, are prone to make the refractive indices of the silica-titania composite oxide particles different, increasing the variation in the refractive index.

Thus, in order to obtain the silica-titania composite oxide powder of the present embodiment, required are the removal of the reaction liquid components by heating the concentrate obtained by the solid-liquid separation as described later, and the conversion of the unreacted alkoxy groups, the uncondensed Si-OH groups, and the uncondensed Ti-OH groups into M-O-M bonds (M is Si or Ti).

What is more important to obtain the silica-titania composite oxide powder of the present embodiment is to sufficiently remove a nitrogen component from the concentrate so that the following relational expression is satisfied before the temperature is set to 400°C or higher in the heating:

$$\text{Nitrogen content (mass\%)} < 0.19 \times \text{Ti content} + 0.35$$

where the Ti content is the content of Ti expressed in % when the total amount of Ti and Si on a mol basis is 100%. The reason why such requirements need to be satisfied is unclear, but the inventors have the following opinion.

Specifically, most of the reaction liquid components chemically bonded to the unreacted alkoxy groups, the uncondensed Si-OH groups, or the uncondensed Ti-OH groups present in the particles at a temperature of about 400°C or higher, mainly in a range of 400°C to 600°C, are decomposed and eliminated, or most of the Si-OH groups or Ti-OH groups are condensed to be M-O-M bonds.

In the present production method, the nitrogen-containing basic catalyst is used as described above. The nitrogen-containing basic catalyst is not completely separated by the solid-liquid separation, but is partially bonded to the above-described Si-OH group or Ti-OH group (will be hereinafter collectively referred to as a "hydroxyl group") by a chemical force. Thus, space around the hydroxyl group is occupied by the nitrogen-containing basic catalyst.

If the hydroxyl group has no nitrogen-containing basic catalyst around, the hydroxyl group is condensed with other adjacent hydroxyl group (to form a M-O-M bond) by heating, thereby simply strengthening the network structure. If the nitrogen-containing basic catalyst occupies the space around the hydroxyl group, the hydroxyl group cannot approach other hydroxyl group, and fails to be condensed. Thus, if the nitrogen-containing basic catalyst remains in a large amount, the amount of hydroxyl groups which cannot be condensed increases.

Naturally, at a higher temperature, the nitrogen-containing basic catalyst is also decomposed and eliminated, and the hydroxyl group can act freely. However, once the temperature reaches such a high decomposition temperature, most of the other hydroxyl groups have already been condensed. Thus, no other hydroxyl group capable of reacting with the free hydroxyl group is considered to be left around the free hydroxyl group, the network structure is considered to be further strengthened. For this reason, the above-described fine voids are left after the nitrogen-containing basic catalyst is eliminated.

According to the above-described mechanism, firing the concentrate containing a large amount of nitrogen (i.e., a large amount of nitrogen-containing basic catalyst) as it is at high temperature produces many fine voids in the silica-titania composite oxide particles. Thus, the variation in the amount of voids among the silica-titania composite oxide particles is considered to become relatively large, resulting in great variation in the refractive index among the silica-titania composite oxide particles. In the present production method, the nitrogen content in the concentrate is greatly reduced as represented by the above formula to avoid such a phenomenon.

As represented by the formula, an allowable nitrogen content increases with the increase in the titanium content.

This is because the small content of the titanium element, i.e., the high ratio of silica, tends to further strengthen the network structure, making the rearrangement of the network structure with reduced fine voids difficult to progress, even at the similar temperature.

In addition to the influence on the variation in the refractive index, firing (heating at a high temperature) the concentrate with the reaction liquid components, i.e., the solvent component, particularly an organic solvent component, remaining in the concentrate may have various influences on workability, e.g., increase inflammability. Thus, drying is usually performed. The drying is often accompanied by heating, but the heating for drying usually causes no events involving the risk of inflammation described above. The drying may change (usually decrease) the nitrogen content.

In the present production method, the firing is performed after the drying, and the nitrogen content in the dried product before the firing satisfies the above formula.

The "firing" in the present production method means applying a temperature of 400°C or higher. When the drying is accompanied by the heating, the upper limit of the heating temperature should be lower than 400°C, preferably lower than 300°C.

Some methods will be described below, in which the product just dried satisfies the above formula of the nitrogen content.

The methods include, for example, a method of washing (preferably with water) the filtered product more than once, a method of drying the product for a long time or at a relatively high temperature, and a method of drying the product under conditions that enable easy removal of volatile components, e.g., blast drying or drying under reduced pressure. The following two methods are particularly preferred.

(I) One of the preferred methods of reducing the nitrogen content of the dried powder after the solid-liquid separation is a method of acid-treating the dispersion of silica-titania composite oxide particles to reduce the nitrogen-containing basic catalyst.

As described above, the reaction step is carried out under basic conditions to obtain the desired silica-titania composite oxide particles, and the dispersion of the silica-titania composite oxide particles is obtained after the reaction step. For reduction of the nitrogen content of the powder that has gone through the solid-liquid separation and the drying, acid is added to the dispersion before the solid-liquid separation to make the dispersion acidic, and then the solid-liquid separation is performed. The nitrogen-containing basic catalyst reacts with the added acid, rather than the hydroxyl group, to produce salt, and is easily removed by washing with water.

The acid used to neutralize and acidify the dispersion may be an inorganic acid such as hydrochloric acid, sulfuric acid, nitric acid or phosphoric acid, or an organic acid such as citric acid or acetic acid.

The rate of acid added is controlled such that the reaction liquid or the dispersion has pH of 7 or less. For efficient reduction of the basic catalyst contained in the silica-titania composite oxide particles, the acid is preferably added in an amount that allows the particle dispersion to have pH of 4 or less, preferably 3 or less. For effective reduction of the basic component, the temperature at which the acid is added is preferably the same as or higher than the temperature for the reaction.

This method requires the solid-liquid separation to be carried out by a method involving filtration.

The above method is performed on the dispersion before the solid-liquid separation. However, instead of the addition of acid to the dispersion before the solid-liquid separation, a concentrate containing particles obtained by the solid-liquid separation may be dispersed in a liquid containing no basic catalyst, followed by the addition of acid, and then the solid-liquid separation may be performed on the resulting dispersion.

This method requires less acid than a method of directly adding the acid to the reaction liquid, and thus is preferable. For the dispersion of the concentrate, a washing liquid is preferably added to the recovered concentrate while stirring. Any known stirring methods can be used. The solution added to disperse the concentrate is preferably water or an organic solvent. The amount of the solution added to disperse the concentrate is preferably in such a range that controls the mass of the silica-titania composite oxide particles to 5 mass% to 50 mass%. If the amount is lower than 5 mass%, the amount of the solution used increases, which is not preferable. If the concentration of the silica-titania composite oxide particles exceeds 50 mass%, vigorous stirring is required for dispersing of the concentrate, which is not preferable. The temperature of the liquid in which the silica-titania composite oxide particles are dispersed is preferably equal to or higher than the temperature during the reaction because the basic catalyst can be efficiently removed at this temperature.

The solid is then recovered again by filtration. Alternatively, to the dispersion before the solid-liquid separation, acid may be added to perform the solid-liquid separation, and the second solid-liquid separation may be performed on the resulting product to obtain a concentrate containing particles. Then, acid may be added to this concentrate dispersed in a liquid containing no basic catalyst to perform the third solid-liquid separation.

(II) Another method for reducing the nitrogen content of the dried powder after the solid-liquid separation is a method of bringing gas containing water vapor into contact with the silica-titania composite oxide particles in the drying step to be described later.

In this method, upon contact with the water vapor, the nitrogen-containing basic catalyst remaining on the particle surface is substituted with a hydroxyl group, thereby reducing the nitrogen content derived from the nitrogen-containing basic catalyst in the dried powder.

The gas containing water vapor is a gas containing the water vapor at a partial pressure of 0.05 to 0.5 relative to the total gas. If the partial pressure of the water vapor is less than 0.05, the nitrogen-containing basic catalyst cannot be successfully substituted with the hydroxy group, and the amount of remaining nitrogen is substantially the same amount as that after the usual drying. If a gas containing water vapor at a partial pressure exceeding 0.5 is used, the drying does not proceed, and thus the nitrogen-containing basic catalyst cannot be efficiently substituted.

The temperature of the gas containing water vapor is preferably 60°C or higher. This is because the low gas temperature makes the removal of the nitrogen-containing basic catalyst difficult. The temperature of the gas is preferably 200°C or lower. Although the high gas temperature facilitates the removal of the nitrogen-containing basic catalyst, it promotes the condensation reaction of the hydroxyl group. This is not preferable because the network structure is strengthened with the nitrogen-containing basic catalyst included. Time for introducing the gas containing water vapor can be set without particular limitation, but is usually in a range of 30 minutes to 8 hours.

The silica-titania composite oxide particles in contact with the gas containing water vapor tend to contain water, and thus needs to be dried in a gas free from water vapor.

The reduction of the nitrogen amount described above may be performed alone, or may be combined with other steps to reduce the nitrogen content more efficiently.

(4) Drying Step

In the present production method, drying is a step of removing the reaction liquid component present between the silica-titania composite oxide particles and part of the reaction liquid component remaining in the particles. In the drying step, a significant mass change accompanies the removal of the components.

The drying is supposed to end when the components that show no significant mass decrease after continuous drying under the same conditions, i.e., the reaction liquid component remaining between the silica-titania composite oxide particles and part of the reaction liquid component remaining in the silica-titania composite oxide particles, are sufficiently removed. The mass decrease is considered to be a decrease of 3% or less in terms of the mass change. However, these components have much less adverse influence than the nitrogen content, eliminating the need to be necessarily the value of 3%.

In the present production method, any drying method is usable without particular limitation. Examples thereof include ventilation drying, blast drying, and vacuum drying.

The drying temperature depends on the solvent component used, but is preferably a temperature equal to or higher than the boiling point of the solvent. The drying temperature is preferably 70°C to 200°C under atmospheric pressure. The drying time, which is not limited to a particular value, is preferably about 2 hours to 48 hours. Such drying provides the dried product in the powder form. The dried product will be hereinafter referred to as "dried powder."

Depending on the drying method described above, the drying lowers the nitrogen content in some cases. Thus, in the present production method, it is not always necessary to check the nitrogen content when the operation of reducing the nitrogen content is performed. It is only required to check and control the nitrogen content of the dried powder before firing.

The nitrogen content in the dried product is determined using a common CHN analyzer. When applied to the above formula, the nitrogen content is calculated in the unit of "%."

The Ti content can be estimated from the amount of the material charged, and can be checked after firing if necessary.

(5) Firing Step

Due to various remaining components, the silica-titania composite oxide particles that have gone through the drying step has a weak skeleton structure, and cannot obtain the functions of an inorganic substance, such as hardness and excellent thermal stability. In the present production method, the particles are fired to remove the residues and obtain a strong skeleton structure.

As described above, firing the silica-titania composite oxide particles in a temperature range of 400°C to 600°C decomposes and eliminates most of the unreacted alkoxy groups and the uncondensed hydroxyl groups remaining in the particles and the reaction liquid components chemically bonded thereto, and improves the mechanical strength. However, some of the hydroxyl groups still remain to leave fine voids. The ratio of the fine voids varies among the silica-titania composite oxide particles. Thus, the silica-titania composite oxide particles have a great difference in refractive index, and the value of the minimum absorbance S cannot be sufficiently reduced.

In the present production method, the particles are fired at a higher temperature, specifically at 800°C or higher, to obtain the silica-titania composite oxide powder of the present embodiment. Specifically, the higher firing temperature allows the formed network structure to be easily rearranged, and further removes the Si-OH groups and the Ti-OH groups as a whole.

This reduces the ratio of the fine voids in every particle, lowering the minimum absorbance.

On the other hand, the higher firing temperature causes a condensation reaction of a hydroxyl group present around a contact point between particles and hydroxyl groups of adjacent silica-titania composite oxide particles.

When the condensation between the silica-titania composite oxide particles proceeds, the particles easily get together. This causes a plurality of silica-titania composite oxide particles to form aggregated particles.

Depending on the situation, such aggregated particles are easily formed when the firing is performed at a temperature exceeding 1100°C, and may be formed at 1000°C to 1100°C in some cases.

Thus, the firing temperature may be 1100°C or lower, more preferably 1000°C or lower.

The firing can be performed by a known method. Typically and preferably, a container in which the dried powder is spread is placed in a furnace of a desired temperature.

The firing time is not limited to a particular value as long as the purpose of the firing can be achieved. However, a too long firing time lowers the productivity. Thus, the firing is performed at a temperature raised to and kept at a target firing temperature for 0.5 hours to 48 hours, more preferably 2 hours to 24 hours.

The firing may be performed in any atmosphere without particular limitation, and may be performed in an inert gas such as argon or nitrogen, or in the atmosphere.

Examples

The present embodiment will be specifically described by way of examples, but the present invention is not limited to these examples.

(Measurement of Average Refractive Index and Minimum Absorbance)

Toluene, 1-bromonaphthalene, 1-chloronaphthalene, diiodomethane, sulfur-containing diiodomethane, 2-methoxyethanol, and benzyl alcohol were blended in various ratios to prepare a plurality of mixed solvents having different refractive indices.

In a clean 30 ml glass vessel, 14.0 g of each of the mixed solvents was placed, to which the silica-titania composite oxide powder previously dried at 100°C for 24 hours and weighed 6.0 g was added. Then, the mixture was dispersed using an ultrasonic homogenizer (Sonifier 250 manufactured by BRANSON) at 20 W for one minute, and the resulting dispersion was introduced into a quartz cell (optical path length: 10 mm) for absorbance measurement.

As a blank sample, a mixed solvent containing no silica-titania composite oxide powder was introduced into a quartz cell.

Each of the quartz cells was attached to a spectrophotometer (UV-visible spectrophotometer V-650 manufactured by JASCO) equipped with a temperature control folder, and the absorbance was measured to four decimal places under the following conditions.

Measurement wavelength: 589 nm
Temperature range: 5°C to 40°C
Measurement temperature increment: 1°C

The lowest absorbance measured under the above conditions was determined to be the minimum value, and the value of the absorbance at that time was defined as the minimum absorbance S.

The refractive index of the mixed solvent having the minimum absorbance at a wavelength of 589 nm at the temperature at which the minimum absorbance was measured was defined as the average refractive index of the silica-titania composite oxide powder.

For the average refractive index, the refractive index of each of the mixed solvents at a wavelength of 589 nm was previously measured to four decimal places using an Abbe refractometer while changing the measurement temperature in a range of 5°C to 40°C was applied as it was.

(Volume-Based Cumulative 50% Diameter (Average Particle Diameter))

About 0.1 g of the silica-titania composite oxide powder was weighed with an electronic balance in a 50 mL glass bottle, about 40 ml of distilled water was added thereto, and the powder was dispersed at 40 W for 10 minutes using an ultrasonic homogenizer (Sonifier 250 manufactured by BRANSON). Then, the volume-based cumulative 50% diameter ($\mu$m) and coefficient of variation of the silica-titania composite oxide powder were measured with a laser diffraction scattering particle size analyzer (LS-230 manufactured by Beckman Coulter, Inc.).

(Amount of Coarse Particles of 5 $\mu$m or more Measured by Coulter Counter Method)

Five 50 mL glass bottles were prepared. In each of the bottles, 1 g of the silica-titania composite oxide powder was weighed with an electronic balance, and 19 g of distilled water or ethanol was added. The powder was dispersed at 40 W for 10 minutes using an ultrasonic homogenizer (Sonifier 250 manufactured by BRANSON) to obtain a measurement sample. The particle diameter of each of the silica-titania composite oxide particles in the samples was measured with a Coulter counter (Multisizer III manufactured by Beckman Coulter, Inc.). At that time, approximately 50,000 particles were measured in each sample, i.e., approximately 250,000 particles in total were measured from the five samples. Among the measured particles, those having particle diameters of 5 $\mu$m or more were counted as the count of coarse particles (ppm) relative to the total count of the particles measured.

(Nitrogen Content)

The nitrogen content of the dried powder was measured as follows. The dried powder was heated to 950°C in an oxygen atmosphere, and the nitrogen content was determined using a CHN analyzer (CHN Coder MT-5 manufactured by Anatec Yanaco Cooperation).

<Example 1>

In a 200 ml three-neck glass flask, 54.6 g of tetramethoxysilane (methyl orthosilicate manufactured by Tama Chemicals Co., Ltd., hereinafter referred to as "TMOS") was charged as metal alkoxide, to which 5.5 g of methanol as an organic solvent and 2.2 g of 0.035 mass% hydrogen chloride as an acid catalyst were added. The resulting mixture was stirred at room temperature for 10 minutes with a stirrer to hydrolyze TMOS.

Subsequently, 8.9 g of titanium tetraisopropoxide (A-1 manufactured by Nippon Soda Co., Ltd., hereinafter referred to as "TPT")) was charged as metal alkoxide in a 30 ml glass vessel, and 8.9 g of isopropyl alcohol (hereinafter referred to as "IPA") was added thereto while stirring with a stirrer.

A diluent of TPT was added to the TMOS hydrolysate being stirred with the stirrer to obtain 80.1 g of a clear composite alkoxide solution.

The titania content, calculated from the amount of alkoxide used, was 8.0 mol%.

A stirrer having a propeller blade was installed in a 300 ml four-neck flask, in which 6.1 g of IPA, 43.0 g of methanol, and 9.4 g of 25 mass% aqueous ammonia were charged and stirred while keeping the temperature at 40°C. To the resulting mixture, the composite alkoxide solution and 28.1 g of 25 mass% aqueous ammonia were separately added dropwise. The solution was turned white after 30 minutes from the start of the addition. The supply of the materials was completed in 4.3 hours while controlling the addition rate, and the silica-titania composite oxide particles were grown.

After the dropwise addition ended, the dispersion was collected in a centrifugal tube and centrifuged at 6000 rpm to obtain a concentrate containing the particles.

The concentrate, to which pure water was added, was dispersed with a stirrer and heated to 40°C. To this dispersion, 1.0 N hydrogen chloride was added to adjust the pH of the dispersion to 4.

The dispersion was centrifuged to obtain a concentrate containing particles.

The obtained concentrate was introduced into a vacuum dryer and kept at 100°C. The weight was stabilized 16 hours after the start of drying. Part of the dried powder was taken out, and the nitrogen content was measured 1.71%. This value was smaller than the value 1.87, calculated from the formula: $0.19 \times$ Ti content + 0.35, where the charged amount of Ti was 8.0%.

The dried powder was fired at a heating rate of 5°C/min and a firing temperature of 900°C for a firing retention time of 12 hours.

The silica-titania composite oxide powder obtained after the firing was measured with a laser diffraction particle size analyzer, and the average particle diameter was 0.64 $\mu$m. The amount of coarse particles of 5 $\mu$m or more were

measured 46 ppm. The average refractive index of the particles was 1.504. The minimum absorbance S was 0.0135, which was significantly smaller than the value calculated from the formula, 0.026 - 0.008 × D = 0.0209, where the average particle diameter was 0.64 μm.

<Comparative Example 1>

Silica-titania composite oxide particles were obtained in the same manner as in Example 1 except that the reaction liquid was centrifuged and dried as it was.

The nitrogen content of the dried powder was 2.11%. This value was larger than the value 1.87, calculated from the formula: 0.19 × Ti content + 0.35, where the charged amount of Ti was 8.0%.

The silica-titania composite oxide powder obtained after the firing was measured with a laser diffraction particle size analyzer, and the average particle diameter was 0.64 μm. The amount of coarse particles of 5 μm or more were measured 42 ppm. The average refractive index of the particles was 1.504. The minimum absorbance S was 0.0310, which was larger than 0.0209.

<Example 2>

Silica-titania composite oxide particles were obtained in the same manner as in Example 1 except that the supply of the materials was completed in 2.4 hours. The nitrogen content of the dried powder was 1.73%.

The silica-titania composite oxide powder obtained after the firing was measured with a laser diffraction particle size analyzer, and the average particle diameter was 0.35 μm. The amount of coarse particles of 5 μm or more were measured 84 ppm. The average refractive index of the particles was 1.504. The minimum absorbance S was 0.0148, which was significantly smaller than the value calculated from the formula, 0.026 - 0.008 × D = 0.0232, where the average particle diameter was 0.35 μm.

<Comparative Example 2>

Silica-titania composite oxide particles were obtained in the same manner as in Example 2 except that the reaction liquid was centrifuged and dried as it was. The nitrogen content of the dried powder was 2.35%.

The silica-titania composite oxide powder obtained after the firing was measured with a laser diffraction particle size analyzer, and the average particle diameter was 0.35 μm. The amount of coarse particles of 5 μm or more were measured 88 ppm. The average refractive index of the particles was 1.504. The minimum absorbance S was 0.0271, which was larger than 0.0232.

<Example 3>

Silica-titania composite oxide particles were obtained in the same manner as in Example 1 except that the dried powder obtained in Example 2 was fired at a firing temperature of 1000°C.

The silica-titania composite oxide powder obtained after the firing was measured with a laser diffraction particle size analyzer, and the average particle diameter was 0.34 μm. The amount of coarse particles of 5 μm or more were measured 284 ppm. The average refractive index of the particles was 1.504. The minimum absorbance was 0.0139, which was significantly smaller than the value calculated from the formula, 0.026 - 0.008 × D = 0.0233, where the average particle diameter was 0.34 μm.

<Example 4>

In a 200 ml three-neck glass flask, 51.6 g of TMOS was charged as metal alkoxide, to which 5.5 g of methanol as an organic solvent and 3.7 g of 0.035 mass% hydrogen chloride as an acid catalyst were added. The resulting mixture was stirred at room temperature for 10 minutes with a stirrer to hydrolyze TMOS.

Subsequently, 14.4 g of TPT was charged as metal alkoxide in a 50 ml glass vessel, and 8.9 g of IPA was added thereto while stirring with a stirrer.

A diluent of TPT was added to the TMOS hydrolysate stirred with the stirrer to obtain 84.1 g of a clear composite alkoxide solution.

The titania content calculated from the amount of alkoxide used was 13.0 mol%.

A stirrer having a propeller blade was installed in a 300 ml four-neck flask, in which 6.1 g of IPA, 43.0 g of methanol, and 9.4 g of 25 mass% aqueous ammonia were charged and stirred while keeping the temperature at 40°C. To the resulting mixture, the composite alkoxide solution and 28.1 g of 25 mass% aqueous ammonia were separately added dropwise. The solution was turned white after 30 minutes from the start of the addition. The supply of the materials was completed in 11.4 hours while controlling the addition rate, and the silica-titania composite oxide particles were grown.

After the dropwise addition ended, the dispersion was collected in a centrifugal tube and centrifuged at 6000 rpm to obtain a concentrate containing the particles.

The dispersion was centrifuged to obtain a concentrate containing particles.

The obtained concentrate was introduced into a vacuum dryer and kept at 100°C. The pressure was reset to the atmospheric pressure after 8 hours from the start of the drying, and the mixture was introduced into a tubular drier (internal volume: 0 4 L) previously heated at 100°C. Then, air having a partial water vapor pressure of 0.3 was allowed to flow at 20 ml/min for four hours. After the introduction of water vapor ended, the mixture was vacuum dried again. The weight was stabilized 16 hours after the start of re-drying. Part of the dried powder was taken out, and the nitrogen content was measured 2.68%. This value was smaller than the value 2.82, calculated from the formula: $0.19 \times$ Ti content $+ 0.35$, where the charged amount of Ti was 13.0%.

The dried powder was fired at a heating rate of 5°C/min and a firing temperature of 900°C for a firing retention time of 12 hours.

The silica-titania composite oxide powder obtained after the firing was measured with a laser diffraction particle size analyzer, and the average particle diameter was 1.35 $\mu$m. The amount of coarse particles of 5 $\mu$m or more were measured 28 ppm. The average refractive index of the particles was 1.543. The minimum absorbance S was 0.0123, which was significantly smaller than the value calculated from the formula, $0.026 - 0.008 \times$ D = 0.0152, where the average particle diameter was 1.35 $\mu$m.

<Comparative Example 3>

Silica-titania composite oxide particles were obtained in the same manner as in Example 4 except that the vacuum drying was continued for 16 hours and the mixture was not brought into contact with a gas containing water vapor in the course of the vacuum drying.

The nitrogen content of the dried powder was 3.04%. This value was smaller than the value 2.82, calculated from the formula: $0.19 \times$ Ti content $+ 0.35$, where the charged amount of Ti was 13.0%.

The silica-titania composite oxide powder obtained after the firing was measured with a laser diffraction particle size analyzer, and the average particle diameter was 1.35 $\mu$m. The amount of coarse particles of 5 $\mu$m or more were measured 24 ppm. The average refractive index of the particles was 1.543. The minimum absorbance S was 0.0168, which was larger than 0.0152.

**Claims**

1. A silica-titania composite oxide powder having an average particle diameter D ($\mu$m) in a range of 0.1 $\mu$m or more to 3.0 $\mu$m or less measured by a laser light scattering method, an average refractive index of 1.47 or more at a measurement wavelength of 589 nm, and a minimum absorbance S measured from a dispersion of 30 mass% silica-titania composite oxide particles in a liquid having the same refractive index as the average refractive index, the minimum absorbance S satisfying the following relationship:

$$S < 0.026 - 0.008 \times D.$$

2. The silica-titania composite oxide powder of claim 1, wherein a ratio of particles having a particle diameter of 5 $\mu$m or more measured by a Coulter counter method is 200 ppm or less on a number basis.

3. A method of producing silica-titania composite oxide particles using an alkoxide of silicon and an alkoxide of titanium as materials, the method comprising:

mixing the alkoxide of silicon and the alkoxide of titanium to prepare a composite alkoxide material;
reacting the composite alkoxide material in the presence of water and a nitrogen-containing basic catalyst to produce particles;
separating the produced particles from a liquid component;
drying the particles; and
firing the dried particles, wherein
the particles after the drying and before the firing has a nitrogen content satisfying the following:

$$\text{Nitrogen content (mass\%)} < 0.19 \times \text{Ti content} + 0.35$$

where the Ti content is the content of Ti expressed in % when the total amount of Ti and Si on a mol basis is 100%.

4. A resin composition comprising the silica-titania composite oxide powder of claim 1 or 2.

5. A dispersion comprising: the silica-titania composite oxide powder of claim 1 or 2; and a solvent dispersing the silica-titania composite oxide powder therein.

**INTERNATIONAL SEARCH REPORT**

| International application No. |
|---|
| PCT/JP2020/010943 |

**A. CLASSIFICATION OF SUBJECT MATTER**
Int. Cl. C01B33/12(2006.01)i, C01B33/18(2006.01)i
FI: C01B33/18 Z, C01B33/12 A

According to International Patent Classification (IPC) or to both national classification and IPC

**B. FIELDS SEARCHED**

Minimum documentation searched (classification system followed by classification symbols)
Int. Cl. C01B33/12, C01B33/18

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-37700 A (TOKUYAMA CORP.) 21 February 2008, entire text | 1-5 |
| A | JP 2007-269612 A (TOKUYAMA CORP.) 18 October 2007, entire text | 1-5 |
| A | JP 2017-36168 A (TOKUYAMA CORP.) 16 February 2017, entire text | 1-5 |

☐ Further documents are listed in the continuation of Box C.    ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 15.05.2020 | 26.05.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## INTERNATIONAL SEARCH REPORT
Information on patent family members

International application No.

PCT/JP2020/010943

| Patent Documents referred to in the Report | Publication Date | Patent Family | Publication Date |
|---|---|---|---|
| JP 2008-37700 A | 21.02.2008 | (Family: none) | |
| JP 2007-269612 A | 18.10.2007 | (Family: none) | |
| JP 2017-36168 A | 16.02.2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004107470 A
- JP H0665475 A
- JP H0333721 B
- JP H0848505 A
- JP 2007269612 A
- JP 2008037700 A
- JP 2007269594 A
- JP 2003252616 A